# EUROPÄISCHE PATENTANMELDUNG

(11) **EP 3 364 061 A1**
(43) Veröffentlichungstag der Anmeldung: **22.08.2018**
(21) Anmeldenummer: 17156879.3
(22) Anmeldetag: 20.02.2017
(51) Int. Cl.: F16C 33/64, F16C 19/22, C21D 1/10

(54) **VERWENDUNG EINES INDUKTIV GEHÄRTETEN WÄLZLAGERS**

(71) Anmelder: Flender GmbH, 46395 Bocholt (DE)
(72) Erfinder: Holtz, Thorsten, 46459 Rees (DE); Holweger, Dirk, 40629 Düsseldorf (DE); Schnapp, Wolfgang, 96179 Mürsbach (DE)
(74) Vertreter: Maier, Daniel Oliver

(57) **Zusammenfassung**

Die Erfindung betrifft eine Verwendung eines induktiv gehärteten Wälzlagers (1, 610a, 610b, 620a, 620b) zur Lagerung eines Planetenträgers (17, 616, 626) in einem Hauptgetriebe (10, 60) einer Windkraftanlage.

## Beschreibung

Die vorliegende Erfindung betrifft eine Verwendung eines induktiv gehärteten Wälzlagers.

Es ist bekannt, einen Planetenträger eines Planetengetriebes in Wälzlagern, umfassend Lagerringe und Wälzkörper, drehbar zu lagern, welche sich an einem Getriebegehäuse des Planetengetriebes bzw. in an dem Getriebegehäuse angeordneten Flanschen abstützen. Beispielsweise zeigt EP 1431575 B1 (Siemens AG) 23.06.2004 in Fig. 1 einen solchen in Planetenträgerlagern 5 gelagerten Planetenträger 2 eines Planetengetriebes für eine WKA (= Windkraftanlage). Die Planetenträgerlager sind regelmäßig diejenigen Lager eines Planetengetriebes, die den größten Durchmesser aufweisen.

Herkömmlich werden Wälzlager mit Durchhärten oder mit Einsatzhärten gehärtet. Die Größe des Härteofens beschränkt dabei den maximalen Durchmesser des Wälzlagers. Eine durch Härteverfahren vorgegebene Größenbeschränkung von Wälzlagern ist angesichts des Bestrebens, immer größere und leistungsfähigere Getriebe, insbesondere für Windkraftanlagen, zu bauen, unerwünscht. Dabei macht sich diese Größenbeschränkung zuerst bei den Planetenträgerlagern bemerkbar, da sie die größten Lager eines Planetengetriebes sind.

Es ist Aufgabe der vorliegenden Erfindung, ein verbessertes Planetenträger-Wälzlager bereitzustellen.

Diese Aufgabe wird erfindungsgemäß durch eine Anwendung mit den in Anspruch 1 angegebenen Merkmalen gelöst. Die Erfindung betrifft eine Verwendung eines induktiv gehärteten Wälzlagers zur Lagerung eines Planetenträgers in einem Hauptgetriebe einer Windkraftanlage. Diese Aufgabe wird erfindungsgemäß außerdem durch ein Hauptgetriebe mit den in Anspruch 10 angegebenen Merkmalen gelöst. Die Erfindung betrifft ein Hauptgetriebe einer Windkraftanlage, wobei zumindest ein Wälzlager zur Lagerung eines Planetenträgers induktiv gehärtet ist.

Die Erfindung betrifft im Wesentlichen die Anwendung von induktiv gehärteten Wälzlagern in einem Windturbinen-Hauptgetriebe. Ein induktiv gehärtetes Wälzlager ist ein Wälzlager, bei dem mindestens eine Komponente oder ein Bauteil, z.B. ein Außenring, ein Innenring oder ein oder mehrere Wälzkörper, induktiv gehärtet ist.

Ein Wälzlager ist ein Lager, bei dem zwischen einem Innenring und einem Außenring rollende Körper den Reibungswiderstand bei einer drehenden Bewegung verringern. Wälzlager werden im Wesentlichen in Kugellager und Rollenlager unterschieden; unter den Rollenlagern haben im Bereich der Planetenträgerlager besondere Bedeutung die Zylinder- und Kegelrollenlager. Es können aber auch beliebige andere Wälzlager als Planetenträgerlager zur Verwendung kommen.

Ein WKA-Hauptgetriebe ist dasjenige Getriebe in einer WKA, welches dazu verwendet wird, die Drehzahl eines meist dreiblättrigen Windrotors, z.B. im Bereich von 10 bis 20 Umdrehungen pro Minute, in eine höhere Drehzahl, z.B. im Bereich von 1500 Umdrehungen pro Minute, zum Antreiben eines Generators zu übersetzen. Ein WKA-Hauptgetriebe kann ein oder zwei Stufen mit Planetengetrieben aufweisen. Die letzte Getriebestufe des WKA-Hauptgetriebes ist in aller Regel als eine Stirnradstufe ausgeführt.

Induktivgehärtete Lager an sich sind nicht neu und werden bereits seit Jahrzehnten in diversen Anwendungen verwendet, siehe zum Beispiel DE 102 28 333 C1 (Rothe Erde GmbH) 25.09.2003, in der ein Verfahren zum Herstellen von Lagerringen in Großwälzlagern beschrieben ist.

Gemäß dem Stand der Technik wird bisher in keinem WKA-Hauptgetriebe ein Wälzlager mit induktivgehärteten Bauteilen, umfassend Ringe und/oder Wälzkörper, eingesetzt.

Bisher wurden induktivgehärtete Wälzlager nicht in Getrieben einer WKA eingesetzt, weil Wälzlager-Hersteller klassisch Durch- oder Einsatzhärtung verwenden, insbesondere mit einer umlaufenden Härtung in den Funktions- und Anschlussflächen.

Bisher wurden induktivgehärtete Wälzlager nicht in Getrieben einer WKA eingesetzt, weil nur Wälzlager mit einem Außendurchmesser von bis zu ca. 2000 mm durch "Schuss- oder Vorschubhärten" umlaufend ohne eine Übergangsstelle / Naht, sogenannt schlupffrei, induktiv gehärtet werden können. Bei großen Wälzlagern mit einem Außendurchmesser von deutlich mehr als 2000 mm wird ein Verfahren angewendet, bei dem der oder die Induktoren umlaufen. Dieses Verfahren hatte bisher zur Folge, dass prozesstechnisch ein ungehärteter Bereich auf der Laufbahn verbleibt, was bei Wälzlagern mit umlaufender Lastzone mit entsprechend vielen Lastwechselzahlen über eine Mindest-Lebensdauer von 20 Jahren die erreichbare Lebensdauer des Wälzlagers erheblich einschränkt.

Ein induktiv gehärtetes Planetenträger-Wälzlager bietet den Vorteil, dass es resistent gegen WEC (= White Etching Cracks) ist. Herkömmlich gefertigte Wälzlager, z.B. sogenannte Durchhärter, d.h. mittels Durchhärten gehärtete Wälzlager, sind weniger resistent oder nicht resistent gegenüber dem Schadensphänomen der WEC. Zwar gibt es verschiedene Maßnahmen an einem herkömmlich gehärteten Wälzlager zur Risikominimierung des Schadensphänomens, z.B. Einsatz von Brünierung, Verwendung von Einsatzstahl und Reduzierung der wälzlagerinternen Belastung. Aber durch die induktive Härtung kann das Risiko des Schadensphänomens der WEC ganz eliminiert werden.

Aus anderen Anwendungen, z.B. dem Einsatz von induktivgehärteten Wälzlagern in dem Windturbinen-Hauptlager zur Lagerung des Windrotors, bekannt ist die Wirksamkeit von induktivgehärteten Wälzlagern gegenüber "WEC". Diese Wirksamkeit wird durch die vorliegende Erfindung auf Wälzlagerpositionen in einem WKA-Hauptgetriebe übertragen. Somit kann durch den Einsatz von induktivgehärteten Wälzlagern in dem Windturbinen-Hauptgetriebe das Schadensphänomen "WEC" in dem Windturbinen-Hauptgetriebe deutlich eingeschränkt oder sogar gänzlich abgestellt werden.

Die Größe des Härteofens gibt bei den herkömmlich verwendeten Verfahren zur Härtung von Wälzlagern, insbesondere Durchhärten und Einsatzhärten, die maximale Größe des Wälzlagers vor. Zum Induktivhärten eines Wälzlagers ist aber kein Härteofen erforderlich. Die Größe des Wälzlagers kann beim Induktivhärten somit unabhängig vom Härteofen ausgelegt werden.

Mit der Induktionshärtung kann die Laufbahn des Wälzlager-Rings selektiv gehärtet werden, während der Rest des Wälzlager-Rings durch den Härtungsprozess nicht verändert wird.

Auch aufgrund des Trends, immer größere Getriebe zu bauen, derzeit für WKA mit einer Leistung von mehr als 8 MW, was demzufolge größere Wälzlager-Dimensionen erfordert, ist der Einsatz eines Wälzlagers mit induktivgehärteten Bauteilen in einem WKA-Hauptgetriebe notwendig. Sollten keine entsprechenden Wälzlager, z.B. Planetenträgerlager, zur Verfügung stehen, so könnten diese Getriebe eventuell nicht entwickelt werden.

Vorteilhafte Ausgestaltungen und Weiterbildungen der Erfindung sind in den abhängigen Ansprüchen angegeben. Dabei kann der erfindungsgemäße Vorrichtungsanspruch auch entsprechend den Verfahrensansprüchen weitergebildet sein, und umgekehrt.

Da das induktive Härten eine Härtung einer Oberfläche und eines oberflächennahen Bereiches des gehärteten Bauteils hervorruft, werden vor allem diejenigen Oberflächen und Bereiche eines Bauteils induktiv gehärtet, welche aufgrund des Wälzkontakts besonders großen Belastungen ausgesetzt sind. Gemäß einer bevorzugten Ausgestaltung der Erfindung ist mindestens eine Wälzkontaktfläche einer der folgenden Komponenten des Wälzlagers induktiv gehärtet: ein Innenring, ein Außenring, ein oder mehrere Wälzkörper. Eine Wälzkontaktfläche eines Innen- oder Außenrings wird auch als Laufbahn bezeichnet. Eine Wälzkontaktfläche eines Zylinderrollenlagers wird als auch Mantelfläche bezeichnet.

Gemäß einer bevorzugten Ausgestaltung der Erfindung ist mindestens eine Wälzkontaktfläche einer der folgenden Komponenten des Wälzlagers induktiv gehärtet: Ein Innenring, eine Laufbahn des Außenrings, eine Wälzkontaktfläche eines oder mehrerer Wälzkörper.

Gemäß einer bevorzugten Ausgestaltung der Erfindung wird eine "Hybrid-Ausführung" eines induktivgehärteten Wälzlagers in einem WKA-Hauptgetriebe eingesetzt, d.h. ein Wälzlager, bei dem eine oder mehrere Komponenten induktiv gehärtet sind und eine oder mehrere Komponenten nicht-induktiv gehärtet sind. Zum Beispiel ist es möglich, dass ein hybrides Wälzlager einen induktiv gehärteten Innenring und einen durchgehärteten Außenring und durchgehärtete Wälzkörper aufweist. Alternativ ist es möglich, dass ein hybrides Wälzlager einen induktiv gehärteten Außenring und einen durchgehärteten Innenring und durchgehärtete Wälzkörper aufweist. Alternativ ist jede andere Kombination von induktiv gehärteten und nicht-induktiv gehärteten Komponenten möglich. Von Vorteil ist dabei, dass gezielt die einem Verschleiß durch eine starke Relativbewegung ausgesetzten Bauteile gehärtet und somit widerstandsfähig sind.

Wälzlager werden sowohl beim Durch- als auch beim Einsatzhärten komplett gehärtet, d.h. die Laufbahnen von Innen- und Außenring, die Innendurchmesser-Oberfläche zur Welle, d.h. der Lagersitz auf der Welle, die Außendurchmesser-Oberfläche zum Gehäuse, d.h. der Lagersitz im Gehäuse, und die axialen Stirnflächen des Wälzlagers sind gehärtet. Die gehärteten Oberflächen besitzen somit einen Verschleißschutz, z.B. bei Bewegungen des Wälzlagers relativ zum Getriebegehäuse oder relativ zu einer in dem Wälzlager gelagerten Welle.

Bisher wurden induktivgehärtete Wälzlager nicht in Getrieben einer WKA eingesetzt, weil bei induktivgehärteten Wälzlagern nur ein Teil des Wälzlagers, insbesondere die Funktionsflächen des Wälzlagers, gehärtet ist; die Anschlussbereiche des Wälzlager, z.B. der Lagersitz auf der Welle, der Lagersitz im Gehäuse oder im Flansch und die Stirnanlageflächen, d.h. Stirnflächen von Innen- und/oder Außenring, haben dagegen nicht die gewünschte Oberflächenhärte, welche auch durch ein Anlassen nicht erzielt wird.

Als Funktionsflächen eines Wälzlagers die durch Wälzkontakt unmittelbar beanspruchten Laufbahnflächen der Wälzlagerringe und die mit den vorgenannten Laufbahnflächen in Wälzkontakt stehenden Oberflächen der Wälzkörper bezeichnet; alle sonstigen Oberflächen eines Wälzlagers werden als Nicht-Funktionsflächen bezeichnet. Bei induktivgehärteten Wälzlagern werden in der Regel nur Funktionsflächen gehärtet, insbesondere eine oder mehrere Laufbahnen und eine oder mehrere Schultern/Borde. Alle sonstigen Oberflächen des Wälzlagers, insbesondere die Innendurchmesser-Oberfläche zur Welle, die Außendurchmesser-Oberfläche zum Gehäuse und die axialen Stirnflächen, werden dagegen beim induktiven Härten nicht gehärtet und sind "weich". In Fällen, wo dieser Umstand unerwünscht ist, können eine oder mehrere folgender Maßnahmen ergriffen werden.

Gemäß einer bevorzugten Ausgestaltung der Erfindung werden der Außenring und/oder Innenring durch eine Verdrehsicherung in Gestalt von mindestens einem Stifte und/oder mindestens einer Passfeder und/oder mindestens einer Kugel und/oder mindestens einer Scheibenfeder gegen eine Relativbewegung gesichert. Es ist möglich, dass ein erster Stift in eine erste Bohrung eingesetzt ist, welche fluchtend in den Außenring und in das Gehäuse eingebracht ist. Es ist möglich, dass ein zweiter Stift in eine zweite Bohrung eingesetzt ist, welche fluchtend in den Innenring und in die Welle eingebracht ist. Von Vorteil ist dabei, dass eine solche Verdrehsicherung sehr einfach herzustellen ist.

Gemäß einer bevorzugten Ausgestaltung der Erfindung erfolgt eine Fixierung des Innen- und/oder Außenrings des induktivgehärteten Wälzlagers im WKA-Hauptgetriebe, z.B. durch ein radiales Verspannen und/oder Schrumpfen und/oder durch ein axiales Verspannen und/oder Schrumpfen und/oder durch eine formschlüssige Ringhalterung. Es ist möglich, dass ein dritter Stift in eine dritte Bohrung eingesetzt ist, welche fluchtend in den Innenring und in die Welle eingebracht ist. Von Vorteil ist dabei, dass durch eine Verdrehsicherung eine Relativbewegung und somit auch eine Verschleißursache beseitigt wird.

Gemäß einer bevorzugten Ausgestaltung der Erfindung werden der Außenring und/oder Innenring durch eine Verdrehsicherung mittels axialem und/oder radialem Klemmen und/oder mindestens einem Pressverband gegen eine Relativbewegung gesichert. Von Vorteil ist dabei, dass eine solche Verdrehsicherung keine zusätzlichen, mechanisch wirkenden Bauteile erfordert.

Gemäß einer bevorzugten Ausgestaltung der Erfindung werden der Außenring und/oder Innenring durch eine Verdrehsicherung mittels Kleben gegen eine Relativbewegung gesichert. Von Vorteil ist dabei, dass eine solche Verdrehsicherung sehr einfach herzustellen ist und keine zusätzlichen, mechanisch wirkenden Bauteile erfordert.

Gemäß einer bevorzugten Ausgestaltung der Erfindung werden der Außenring und/oder Innenring durch eine Verdrehsicherung mittels einer geänderten Oberflächenstruktur gegen eine Relativbewegung gesichert. Es ist dabei möglich, dass eine Reibwerterhöhung zwischen dem Außenring und/oder Innenring und dem Gehäuse bzw. der Welle durch z.B. eine eingebrachte definierte Riefenstruktur mittels Laser oder mechanischer Bearbeitung erzielt wird. Von Vorteil ist dabei, dass eine solche Verdrehsicherung sehr einfach herzustellen ist und keine zusätzlichen, mechanisch wirkenden Bauteile erfordert.

Gemäß einer bevorzugten Ausgestaltung der Erfindung werden der Außenring und/oder Innenring durch einen Verschleißschutz und/oder eine Beschichtung und/oder einen Gleitlack gegen zu schnellen Verschleiß geschützt. Der Verschleißschutz des Außenrings und/oder Innenrings kann dabei in Kombination mit einer formschlüssigen Sicherung des Außenrings und/oder des Innenrings, insbesondere in Gestalt einer der oben genannten Verdrehsicherungen, vorgenommen werden. Von Vorteil ist dabei, dass eine solche Verdrehsicherung sehr einfach herzustellen ist.

Gemäß einer bevorzugten Ausgestaltung der Erfindung wird ein schlupffreies Induktivhärten mit einem umlaufenden Induktor für den Einsatz in Windgetrieben verwendet. Von Vorteil ist dabei, dass das Wälzlager umlaufend ohne ungehärtete Bereiche, sogenannt schlupffrei, induktiv gehärtet werden kann.

Gemäß einer bevorzugten Ausgestaltung der Erfindung sind Nicht-Funktionsflächen des Wälzlagers induktiv gehärtet, insbesondere Oberflächen des Wälzlagers, welche radial und/oder axial an andere Getriebebauteile des Hauptgetriebes, insbesondere eine Getriebewelle, ein Getriebegehäuse, einen Getriebeflansch oder einen Zwischenring, angrenzen. Nicht-Funktionsflächen des Wälzlagers sind dabei insbesondere solche Oberflächen einer oder mehrerer Komponenten des Wälzlagers, welche nicht in Wälzkontakt mit einer Oberfläche einer oder mehrerer anderer Komponenten des Wälzlagers kommen.

Gemäß einer bevorzugten Ausgestaltung der Erfindung sind Nicht-Funktionsflächen des Wälzlagers induktiv gehärtet, d.h. Flächen des Wälzlagers, welche radial und/oder axial an andere Bauteile des Hauptgetriebes wie eine Getriebewelle, ein Getriebegehäuse, einen Getriebeflansche oder einen Zwischenring, angrenzen. Von Vorteil ist dabei, dass durch die induktive Härtung der Verschleiß an solchen Nicht-Funktionsflächen, z.B. einem Lagersitz auf einer Welle oder einem Lagersitz in einem Gehäuseflansch, reduziert wird.

Im Folgenden wird die Erfindung anhand mehrerer Ausführungsbeispiele unter Zuhilfenahme der beiliegenden Zeichnung erläutert. Es zeigt jeweils schematisch und nicht maßstabsgetreu
- Fig. 1: einen Schnitt durch ein Wälzlager;
- Fig. 2: einen Schnitt durch einen Innenring eines Wälzlagers;
- Fig. 3: einen Schnitt durch einen Außenring eines Wälzlagers;
- Fig. 4: einen Schnitt durch ein Planetengetriebe;
- Fig. 5: eine Schrägansicht eines WKA-Antriebsstrangs; und
- Fig. 6: einen Schnitt durch ein WKA-Hauptgetriebe.

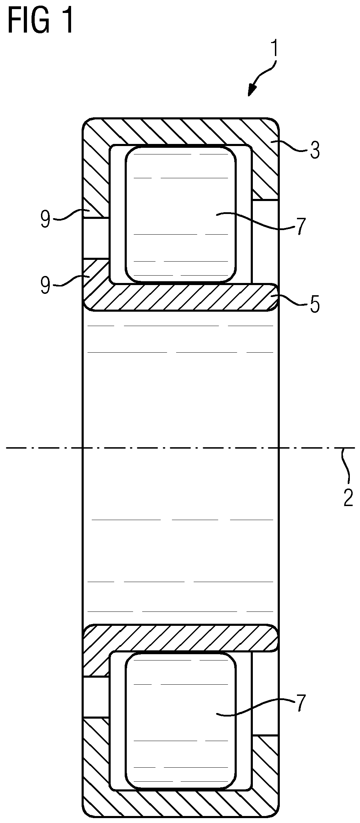

Fig. 1 zeigt einen Schnitt durch ein als Zylinderrollenlager ausgebildetes Wälzlager 1 entlang dessen Rotationsachse 2. Das Wälzlager 1 umfasst einen Innenring 5, einen den Innenring 5 koaxial umgebenden Außenring 3, und mehrere Wälzkörper 7, hier: Zylinderrollen, die im radialen Zwischenraum zwischen dem Innenring 5 und dem Außenring 3 rotierbar angeordnet sind. Dabei weisen der Innenring 5 und der Außenring 3 jeweils Schultern 9 auf, die auch als Borde bezeichnet werden. Dabei können Oberflächen des Wälzlagers 1, welche gegen Verschleiß besonderes geschützt sein sollen, induktiv gehärtet sein, insbesondere Laufflächen und Schultern von Innenring 5 und Außenring 3 sowie die Oberflächen der Wälzkörper 7.

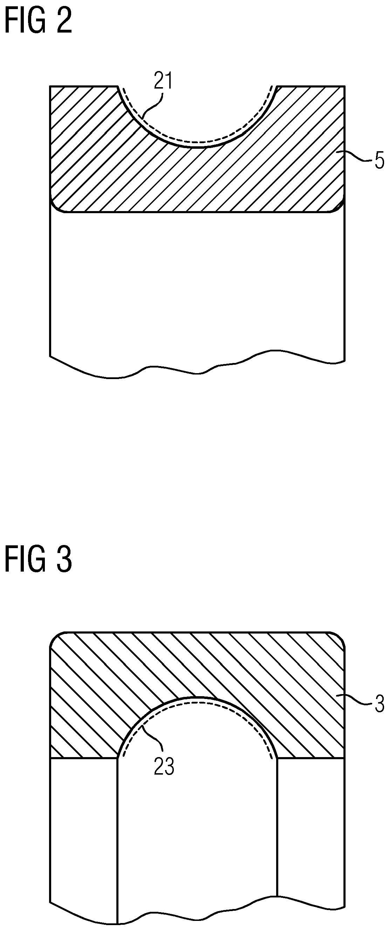

Fig. 2 zeigt einen Schnitt durch einen Innenring 5 eines als Kugellager ausgebildeten Wälzlagers. Die Lauffläche 21 des Innenrings 5 ist induktiv gehärtet.

Fig. 3 zeigt einen Schnitt durch einen Außenring 3 eines als Kugellager ausgebildeten Wälzlagers. Die Lauffläche 23 des Innenrings 5 ist induktiv gehärtet.

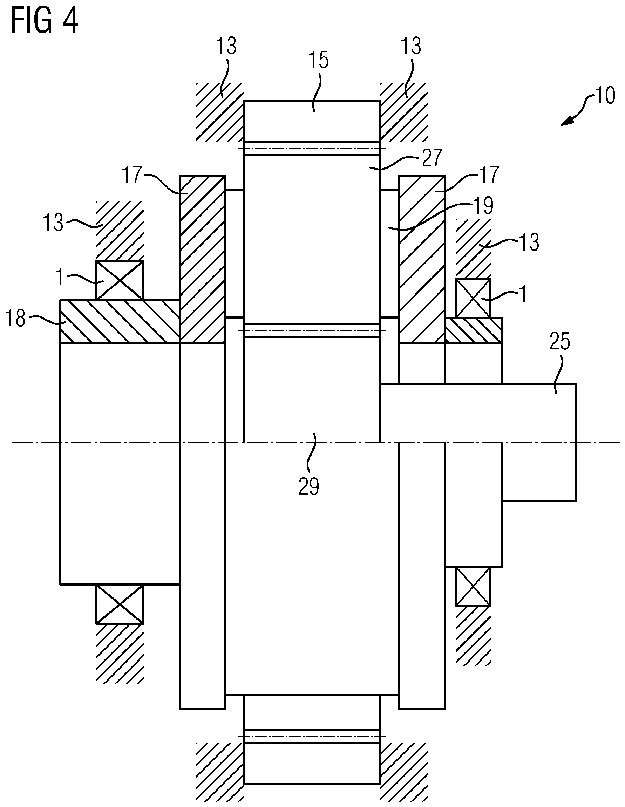

Fig. 4 zeigt einen Längsschnitt durch ein Planetengetriebe 10. Das Getriebe 10 umfasst ein Getriebegehäuse 13. Ein Planetenträger 17 ist in dem Getriebegehäuse 13 in zwei Wälzlagern 1 drehbar gelagert und besteht aus zwei parallelen Seitenwangen, die durch nicht gezeigte Stege miteinander verbunden sind.

In dem Planetenträger 17 sind mehrere Planetenräder 27 drehbar in nicht gezeigten Planetenradlagern gelagert. Die Planetenradlager, die z.B. als zwei- oder mehrreihige Wälzlager oder als Gleitlager ausgebildet sind, stützen sich über eine Planetenachse 19 auf dem Planetenträger 17 ab. Die Planetenräder 27 stehen einerseits mit einem fest am Getriebegehäuse 13 angeordneten Hohlrad 15 und anderseits mit einem zentral angeordneten Sonnenrad 29 in Eingriff. Das Sonnenrad 29 ist drehfest mit einer Sonnenradwelle 25 verbunden. Bei dem in einer WKA als Hauptgetriebe eingesetzten Planetengetriebe 10 ist eine als Getriebe-Eingangswelle fungierende Nabe des Planetenträgers 17 mit einer mit dem Windrotor verbundenen Rotorwelle gekoppelt, während die als Getriebe-Ausgangswelle fungierende Sonnenradwelle 25 mit einem Generator zur Erzeugung elektrischer Energie gekoppelt ist.

Gemäß der Erfindung sind die beiden Wälzlager 1, in denen der Planetenträger 17 in dem Getriebegehäuse 13 gelagert ist, induktiv gehärtete Wälzlager. Die Wälzlager 1 können dabei als Kegel- oder Zylinderrollenlager ausgebildet sein.

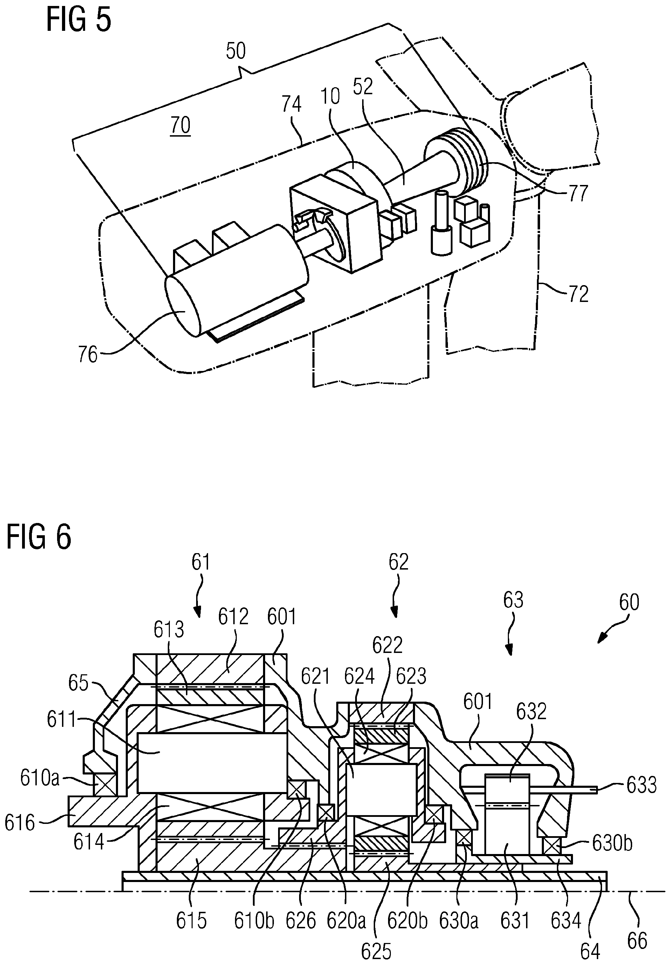

In Fig. 5 ist schematisch der Aufbau einer Windkraftanlage 70 dargestellt, die eine Gondel 74 aufweist, an der ein Windrotor 72 angebracht ist. Der Windrotor 72 ist über eine Windrotorwelle 52 mit einem Hauptgetriebe 10 drehmomentübertragend verbunden. Die Windrotorwelle 52 gehört zusammen mit dem Hauptgetriebe 10, einem Generator 76 und einem Windrotorwellenhauptlager 77 zu einem Antriebsstrang 50 der Windenergieanlage 70. Das Hauptgetriebe 10 wiederum ist drehmomentübertragend mit einem Generator 76 verbunden, über den Elektrizität gewonnen wird.

Fig. 6 ist ein Längsschnitt durch ein Hälfte, bezogen auf eine Mittelachse 66, eines mehrstufiges Hauptgetriebe 60 einer WKA. Das dargestellte Hauptgetriebe 60 ist auf dem Turm einer nicht gezeigten Windkraftanlage angeordnet und dient zum Antrieb eines Generators durch einen Flügel tragenden Windrotor. Das Getriebe 60 umfasst ein Getriebegehäuse 65, in dem eine erste Getriebestufe 61, eine zweite Getriebestufe 62 und eine dritte Getriebestufe 63, in dieser Reihenfolge hintereinander geschaltet in Richtung von dem Windrotor zu dem Generator, angeordnet sind. Die erste Getriebestufe 61 ist als eine erste Planetenstufe ausgebildet und wird von einem Windrotor angetrieben. Die erste Getriebestufe 61 des Getriebes 60 umfasst einen ersten Planetenträger 616, der mit der Windrotorwelle des nicht gezeigten Windrotors verbunden ist. Der erste Planetenträger 616 ist in dem Getriebegehäuse 65 in ersten Wälzlagern 610a, 610b drehbar gelagert und besteht aus zwei parallelen Seitenwangen, die durch nicht gezeigte Stege miteinander verbunden sind.

In dem ersten Planetenträger 616 sind mehrere erste Planetenräder 613 drehbar in ersten Planetenradlagern 614 gelagert. Die ersten Planetenradlager 614, die als zwei- oder mehrreihige Wälzlager ausgebildet und in dem ersten Planetenrad 613 angeordnet sind, stützen sich über eine erste Planetenachse 611 auf dem ersten Planetenträger 616 ab. Die ersten Planetenräder 613 stehen einerseits mit einem fest am Getriebegehäuse 65 angeordneten ersten Hohlrad 612 und anderseits mit einem zentral angeordneten ersten Sonnenrad 615 in Eingriff. Das erste Sonnenrad 615 ist drehfest mit einer ersten Sonnenradwelle verbunden, welche mittels einer Zahnkupplung mit einem zweiten Planetenträger 626 einer als Planetenstufe ausgebildeten zweiten Getriebestufe 62 rotatorisch gekoppelt ist.

Die zweite Getriebestufe 62 umfasst eine zweites Sonnenrad 625, das mit mehreren zweiten Planetenrädern 623 in Eingriff steht, die ihrerseits in ein fest an dem Getriebegehäuse 65 angeordnetes zweites Hohlrad 622 eingreifen. Die zweiten Planetenräder 623 sind über zweite Planetenradlager 624 in dem zweiten Planetenträger 626 gelagert und stützen sich jeweils über eine zweite Planetenachse 621 in dem zweiten Planetenträger 626 ab. Der zweite Planetenträger 626 ist in dem Getriebegehäuse 65 in zweiten Wälzlagern 620a, 620b drehbar gelagert und besteht aus zwei parallelen Seitenwangen, die durch nicht gezeigte Stege miteinander verbunden sind.

Das zweite Sonnenrad 625 ist drehfest mit einer zweiten Sonnenradwelle verbunden, welche mittels einer Zahnkupplung mit einer Hohlwelle 634 einer als Stirnradstufe ausgebildeten dritten Getriebestufe 63 rotatorisch gekoppelt ist. Die Hohlwelle 634, welche von einem drehfest auf der Hohlwelle 634 sitzenden ersten Stirnrad 631 radial umgeben ist, ist in dem Getriebegehäuse 65 in dritten Wälzlagern 630a, 630b drehbar gelagert. Das erste Stirnrad 631 kämmt mit einem zweiten Stirnrad 632, welches drehfest auf einer in dem Getriebegehäuse 65 drehbar gelagerten Abtriebswelle 633 angeordnet ist.

Entlang der Mittelachse 66 des Getriebes 60 verläuft ein sogenanntes Pitchrohr 64 axial durch das gesamte Getriebe 60. Das Pitchrohr 64 dient als Kanal zur Durchführung von Versorgungsleitungen vom generatorseitigen Ende des Getriebes 60 zur Nabe des Windrotors.

Gemäß der Erfindung sind die ersten Wälzlager 610a, 610b zur Lagerung des ersten Planetenträgers 616 und die zweiten Wälzlager 620a, 620b zur Lagerung des zweiten Planetenträgers 626 induktiv gehärtete Wälzlager.

## Patentansprüche

1. Verwendung eines induktiv gehärteten Wälzlagers (1, 610a, 610b, 620a, 620b) zur Lagerung eines Planetenträgers (17, 616, 626) in einem Hauptgetriebe (10, 60) einer Windkraftanlage.

2. Verwendung nach Anspruch 1, wobei mindestens eine der folgenden Komponenten des Wälzlagers (1, 610a, 610b, 620a, 620b) induktiv gehärtet ist: Eine Wälzkontaktfläche eines Innenrings (5), eine Wälzkontaktfläche eines Außenrings (3), eine Wälzkontaktfläche eines oder mehrerer Wälzkörper (7).

3. Verwendung nach Anspruch 2, wobei mindestens eine der folgenden Komponenten des Wälzlagers (1, 610a, 610b, 620a, 620b) nicht-induktiv gehärtet ist: Ein Innenring (5), ein Außenring (3), ein oder mehrere Wälzkörper (7).

4. Verwendung nach einem der vorhergehenden Ansprüche, wobei der Innenring (5) und/oder Außenring (3) des Wälzlagers (1, 610a, 610b, 620a, 620b) durch ein radiales Verspannen und/oder Schrumpfen und/oder durch ein axiales Verspannen und/oder Schrumpfen und/oder durch eine formschlüssige Ringhalterung gegen eine Verdrehung gesichert wird.

5. Verwendung nach einem der vorhergehenden Ansprüche, wobei der Außenring und/oder der Innenring des Wälzlagers (1, 610a, 610b, 620a, 620b) durch mindestens einen Stift und/oder mindestens eine Passfeder und/oder mindestens eine Kugel und/oder mindestens eine Scheibenfeder gegen eine Verdrehung gesichert werden.

6. Verwendung nach einem der vorhergehenden Ansprüche, wobei der Außenring und/oder Innenring des Wälzlagers (1, 610a, 610b, 620a, 620b) durch axiales und/oder radiales Klemmen und/oder mindestens einen Pressverband gegen eine Verdrehung gesichert wird.

7. Verwendung nach einem der vorhergehenden Ansprüche, wobei der Außenring und/oder Innenring des Wälzlagers (1, 610a, 610b, 620a, 620b) durch Kleben gegen eine Verdrehung gesichert wird.

8. Verwendung nach einem der vorhergehenden Ansprüche, wobei der Außenring und/oder Innenring des Wälzlagers (1, 610a, 610b, 620a, 620b) durch eine geänderte Oberflächenstruktur im Außenring und/oder Innenring, z.B. eine definierte, mittels Laser oder mechanischer Bearbeitung in den Außenring und/oder Innenring eingebrachte Riefenstruktur, gegen eine Verdrehung gesichert wird.

9. Verwendung nach einem der vorhergehenden Ansprüche, wobei der Außenring und/oder Innenring des Wälzlagers (1, 610a, 610b, 620a, 620b) durch einen Verschleißschutz, insbesondere durch eine Beschichtung wie einen Gleitlack, gegen Verschleiß geschützt wird.

10. Hauptgetriebe (10, 60) einer Windkraftanlage, wobei zumindest ein Wälzlager (1, 610a, 610b, 620a, 620b) zur Lagerung eines Planetenträgers (17, 616, 626) induktiv gehärtet ist.

11. Hauptgetriebe (10, 60) nach Anspruch 10, wobei Nicht-Funktionsflächen des Wälzlagers (1, 610a, 610b, 620a, 620b) induktiv gehärtet sind, insbesondere Oberflächen des Wälzlagers (1, 610a, 610b, 620a, 620b), welche radial und/oder axial an andere Getriebebauteile des Hauptgetriebes (10, 60), insbesondere eine Getriebewelle, ein Getriebegehäuse, einen Getriebeflansch oder einen Zwischenring, angrenzen.
